# EUROPEAN PATENT SPECIFICATION

(11) **EP 3 611 960 B1**
(45) Date of publication and mention of the grant of the patent: **18.08.2021**
(21) Application number: 18794660.3
(22) Date of filing: 04.05.2018
(51) Int. Cl.: H04W 48/18, H04W 76/18, H04W 28/02

(54) **NETWORK OVERLOAD CONTROL METHOD AND DEVICE**
VERFAHREN UND VORRICHTUNG ZUR ÜBERLASTUNGSSTEUERUNG IN EINEM NETZWERK
PROCÉDÉ ET DISPOSITIF DE CONTRÔLE DE SURCHARGE DE RÉSEAU

(30) Priority: 05.05.2017 CN 201710313495
(43) Date of publication of application: 19.02.2020
(73) Proprietor: Huawei Technologies Co., Ltd., Longgang District Shenzhen, Guangdong 518129 (CN)
(72) Inventor: HAN, Feng, Shenzhen Guangdong 518129 (CN); TAN, Wei, Shenzhen Guangdong 518129 (CN); LIAO, Zilong, Shenzhen Guangdong 518129 (CN)
(74) Representative: Gill Jennings & Every LLP
(86) International application number: PCT/CN2018/085590
(87) International publication number: WO 2018/202122

(56) References cited:
- WO-A1-2016/145575
- WO-A2-2016/122219
- CN-A- 106 549 806
- CN-A- 107 734 708
- KDDI: "23.501: Introducing congestion and overload control for AMF and SMF", 3GPP DRAFT; S2-170299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Spokane, USA; 20170116 - 20170120 16 January 2017 (2017-01-16), XP051216488, Retrieved from the Internet: URL:http://www.3gpp.org/ftp/Meetings_3GPP_ SYNC/SA2/Docs/ [retrieved on 2017-01-16]
- HUAWEI HISILICON: "Key Issues for Support of Network Slicing in RAN", 3GPP DRAFT; R2-167585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20161114 - 20161118 13 November 2016 (2016-11-13), XP051177452, Retrieved from the Internet: URL:http://www.3gpp.org/ftp/Meetings_3GPP_ SYNC/RAN2/Docs/ [retrieved on 2016-11-13]
- HUAWEI ET AL: "UE Slice Association/Overload control Procedure", 3GPP DRAFT; S2-162981 WAS S2-162605_UE SLICE ASSOCIATION_OVERLOAD CONTROL PROCEDURE_V1.1, 3RD GENERATION PARTNERSHIP PROJECT (3GPP), MOBILE COMPETENCE CENTRE ; 650, ROUTE DES LUCIOLES ; F-06921 SOPHIA , vol. SA WG2, no. Nanjing, China; 20160523 - 20160527 26 May 2016 (2016-05-26), XP051108985, Retrieved from the Internet: URL:http://www.3gpp.org/ftp/Meetings_3GPP_ SYNC/SA2/_Update02/ [retrieved on 2016-05-26]
- HUAWEI et al.: "UE Slice Association/Overload Control Procedure", 3GPP TSG SAWG2 Meeting #115 S2-162605, 17 May 2016 (2016-05-17), XP051108985,

## Description

### TECHNICAL FIELD

The present invention relates to the field of wireless communications, and in particular, to a network overload control method and an apparatus.

### BACKGROUND

With rapid development of wireless communications technologies, a fifth-generation (5th Generation, 5G) wireless communications technology has been a popular subject in the industry currently. 5G supports a variety of application requirements, for example, supports an access capability characterized by higher-rate experience and higher bandwidth, information exchange characterized by a lower latency and high reliability, and access and management of larger-scale and low-cost machine type communications devices. In addition, 5G supports various vertical-industry application scenarios oriented to the internet of vehicles, emergency communication, industrial Internet, and the like.

To this end, an important concept, namely, a network slice, is introduced in 5G. A network slice is a combination of a network function (Network Functions, NFs) that implements a communication service and a network capability and a corresponding resource requirement, and includes a core network (Core Network, CN) part, a radio access network (Radio Access Network, RAN) part, and a terminal device part. A network slice forms an end-to-end logical network to meet performance requirements of one or more network services of a slice demand party. A plurality of network slices are deployed in one CN to meet requirements of different users and different services. One RAN may support a plurality of network slices. For example, one RAN may support a plurality of vertical-industry applications. Different network slices usually have different performance requirements. For example, machine type communication requires that massive connections can be supported by a network, and ultra-reliable and low-latency communication requires a very short network latency. Therefore, the network needs to differentiate different network slices, and differentiated processing of quality of service (Quality of Service, QoS) is implemented even in one network slice. In addition, the network should ensure that impact between network slices is minimized. For example, when a resource of a network slice becomes congested because the network slice corresponds to a large quantity of user access demands or because a service volume rises, performance of another network slice that works normally should not be affected.

A conventional overload control method of a cellular network is implemented based on a service type of a user terminal, and cannot effectively provide differentiated overload control for different network services. A 5G network needs to provide differentiated network overload control for different network slices. Currently, no proper solution is available to perform overload control for different network slices. 3GPP TDoc S2-170299, "23.501: Introducing congestion and overload control for AMF and SMF", describes an AMF (Access and Mobility management Function) which contains mechanisms for avoiding and handling mobility management signaling congestion. These can include the use of NAS signaling to reject NAS requests from UEs. In addition, the AMF shall utilize General NAS level Mobility Management (MM) Congestion Control described in clause 4.3.7.4.2 in TS 23.401 to a UE. With General NAS level MM Congestion Control, the AMF may also use the rejection of NAS level MM signaling requests under general congestion conditions such as detecting congestion of one or several AMFs serving for particular SSTs (Slice/Service Types) or SD (Service Differentiator).
3GPP TDoc R2-167585, "Key Issues for Support of Network Slicing in RAN", describes sharing of radio resources among multiple network slices, and describes slice-specific congestion control that is enabled when an RRC connection is released/rejected.

### SUMMARY

The invention is defined by the appended claims, and relates to network control overload methods (claims 1, 2) and apparatuses (claims 7, 8) so that a network can effectively perform overload control for different network slices.

According to a first aspect, an embodiment of this application provides a network overload control method, including: determining, by a CN device, to perform overload control for at least one network slice; and sending, by the CN device, a first message to a RAN device, where the first message is used to instruct the RAN device to perform an overload action on a radio resource control (Radio Resource Control, RRC) request of the at least one network slice, and the first message further includes a traffic load reduction indication, used to indicate a proportion of RRC requests that are initiated by a terminal device for the at least one network slice and that are rejected by the RAN device. According to this embodiment, the CN device can instruct the RAN device to perform overload control for the at least one network slice, so that the network effectively performs overload control for any network slice. According to this embodiment, the CN device can indicate an extent to which a load is decreased during the overload control for the at least one network slice corresponding to the at least one piece of single network slice selection assistance information or the at least one network slice category.

In a possible implementation, the first message includes an overload response to at least one piece of single network slice selection assistance information or at least one network slice category. According to this embodiment, the CN device can instruct overload control for at least one network slice corresponding to the at least one piece of single network slice selection assistance information or the at least one network slice category.

In a possible implementation, the performing an overload action on an RRC request of the at least one network slice includes at least one of the following: rejecting RRC connection setup for non-emergency data transmission of the at least one network slice when the terminal device conducts a mobile originated call, rejecting RRC connection setup for signaling of the at least one network slice when the terminal device conducts the mobile originated call, allowing only RRC connection setup for a service and an emergency session of the at least one network slice when the terminal device conducts a mobile terminated call, allowing only RRC connection setup for a service and a high-priority session of the at least one network slice when the terminal device conducts the mobile terminated call, or rejecting only RRC connection setup for delay tolerant access of the at least one network slice. According to this embodiment, an overload action can be performed on RRC requests of the at least one network slice for different causes.

According to a second aspect, an embodiment of this application provides a network overload control method, including: receiving, by a RAN device, a second message sent by a terminal device, where the second message is used to indicate the RRC request of the at least one network slice by the terminal device, performing, by the RAN device, the overload action on the RRC request of the at least one network slice; and sending, by the RAN device, a second message response to the terminal device, where the second message response is used by the RAN device to notify the terminal device of a result of the overload action performed by the RAN device on the RRC request of the at least one network slice. According to this embodiment, the RAN device can perform the overload action on the RRC request that is initiated by the terminal device for the at least one network slice, so that the network effectively performs overload control for any network slice. According to this embodiment, an extent to which a load is decreased during overload control for the at least one network slice corresponding to the at least one piece of single network slice selection assistance information or the at least one network slice category can be obtained from the CN device.

In a possible implementation, before the receiving, by a RAN device, a second message sent by a terminal device, the method further includes: receiving, by the RAN device, a first message sent by a CN device, where the first message is used to instruct the RAN device to perform the overload action on the RRC request of the at least one network slice. According to this embodiment, the RAN device obtains, from the CN device, information about the network slice that requires overload control and the corresponding overload action that needs to be performed, so that the network effectively performs overload control for any network slice.

In a possible implementation, the second message includes an RRC request cause of at least one slice/service type or at least one network slice category. According to this embodiment, an overload action can be performed on different RRC request causes of the at least one slice/service type or the at least one network slice category.

In a possible implementation, the performing the overload action on the RRC request of the at least one network slice includes at least one of the following: rejecting RRC connection setup for non-emergency data transmission of the at least one network slice when the terminal device conducts a mobile originated call, rejecting RRC connection setup for signaling of the at least one network slice when the terminal device conducts the mobile originated call, allowing only RRC connection setup for a service and an emergency session of the at least one network slice when the terminal device conducts a mobile terminated call, allowing only RRC connection setup for a service and a high-priority session of the at least one network slice when the terminal device conducts the mobile terminated call, or rejecting only RRC connection setup for delay tolerant access of the at least one network slice. According to this embodiment, an overload action can be performed on RRC requests of the at least one network slice for different causes.

According to a third aspect, a communications apparatus is provided, configured to perform the method in any one of the first or second aspect or the possible implementations of the first or second aspect. Specifically, the communications apparatus may include units configured to perform the method in any one of the first or second aspect or the possible implementations of the first or second aspect.

According to a fifth aspect, a communications apparatus is provided, including a memory and a processor. The memory is configured to store a computer program. The processor is configured to invoke the computer program from the memory and run the computer program, so that the communications apparatus performs the method in any one of the first or second aspect or the possible implementations of the first or second aspect.

These and other aspects of the present invention are clearer and easy to understand in descriptions of the following (a plurality of) embodiments.

### BRIEF DESCRIPTION OF DRAWINGS

The following briefly describes the accompanying drawings used in the description of the embodiments of this application or the prior art.
FIG. 1 shows a communications system according to an embodiment of this application;
FIG. 2 is a schematic flowchart of an overload control method according to an embodiment of this application;
FIG. 3 is a schematic flowchart of another overload control method according to an embodiment of this application;
FIG. 4 is a schematic block diagram of a terminal device according to an embodiment of this application;
FIG. 5 is another schematic block diagram of a terminal device according to an embodiment of this application;
FIG. 6 is a schematic block diagram of a RAN device according to an embodiment of this application;
FIG. 7 is another schematic block diagram of a RAN device according to an embodiment of this application;
FIG. 8 is a schematic block diagram of a CN device according to an embodiment of this application; and
FIG. 9 is another schematic block diagram of a CN device according to an embodiment of this application.

### DESCRIPTION OF EMBODIMENTS

The following describes the embodiments of this application with reference to the accompanying drawings in the embodiments of this application.

In this application, the word "example" is used to represent giving an example, an illustration, or a description. Any embodiment described as "example" in this application should not be explained as being more preferred or having more advantages than another embodiment. To enable any person skilled in the art to implement and use the present invention, the following description is provided. In the following description, details are set forth for the purpose of explanation. It should be understood by a person of ordinary skill in the art that the present invention can be implemented without these specific details. In other examples, well-known structures and processes are not described in detail to avoid obscuring the description of the present invention with unnecessary details. Therefore, the present invention is not limited to the embodiments described but extends to the widest scope that complies with the principles and features disclosed in this application.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units expressly listed, but may include other steps or units not expressly listed or inherent to such a process, method, product, or device.

The terms "system" and "network" may be often used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Specific embodiments are used below to describe in detail the technical solutions of the present invention. The following several specific embodiments may be combined with each other, and a same or similar concept or process may not be described repeatedly in some embodiments.

It should be understood that the embodiments of this application may be applied to various communications systems, for example, a Global System for Mobile Communications (Global System for Mobile communications, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), an LTE system, an LTE frequency division duplex (Frequency Division Duplex, FDD) system, an LTE time division duplex (Time Division Duplex, TDD) system, an Advanced Long Term Evolution (Advanced long term evolution, LTE-A) system, a Universal Mobile Telecommunications System (Universal Mobile Telecommunication System, UMTS), or a next-generation wireless communications system, such as a New Radio (New Radio, NR) system, evolved LTE (evolved LTE, eLTE), and the like.

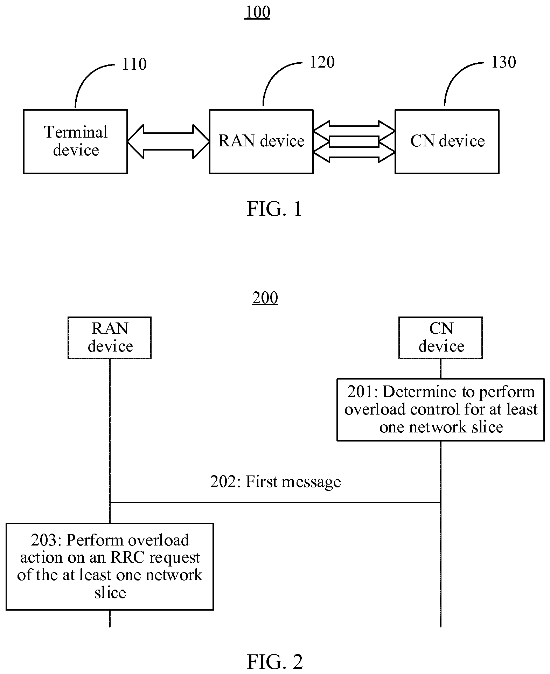

A network overload control method and an apparatus provided in the embodiments of this application are applicable to congestion control when a terminal device communicates with a network device. FIG. 1 is a schematic diagram of a wireless communications system according to an embodiment of the present invention. The wireless communications system 100 includes a terminal device 110, a RAN device 120, and a CN device 130. The RAN device 120 and the CN device 130 are collectively referred to as a network device. The RAN device 120 in FIG. 1 may be an access point (ACCESS POINT, AP) in a WLAN, a base transceiver station (Base Transceiver Station, BTS) in GSM or CDMA, a NodeB (NodeB, NB) in WCDMA, an evolved Node B (Evolved Node B, eNB or eNodeB) in LTE, a relay station or an access point, an in-vehicle device, a wearable device, a network device in a future 5G network, and a network device in a future evolved PLMN network, for example, may be a base station of 5G (for example, a next-generation Node B (Next-generation Node B, gNB) or an NR node), a transmission and reception point (Transmission and Reception Point, TRP), a centralized processing unit (Centralized Unit, CU), or a distributed processing unit (Distributed Unit, DU). It should be understood that, in an actual network, one RAN device may provide services for a plurality of terminal devices. In this embodiment of this application, the terminal device 110 communicates with the RAN device 120 by using a transmission resource (for example, a frequency domain resource or a spectrum resource) used by a cell managed by the RAN device 120. The cell may be a macro cell (Macro Cell), a hyper cell (Hyper Cell), or a small cell (small cell). The small cell herein may include a metro cell (Metro cell), a micro cell (Micro cell), a pico cell (Pico cell), a femto cell (Femto cell), and so on. These small cells are characterized by small coverage and low transmit power and are applicable to providing a high-rate data transmission service.

The CN device 130 in FIG. 1 may be a mobility management entity (Mobile Management Entity, MME) or a gateway (Gateway) in LTE, or may be a control plane (Control Plane, CP) NF or a user plane (User Plane, UP) NF in a 5G network. On a CP plane of a CN, a plurality of network slices have both a common CP NF and respective dedicated CP NFs. On a UP plane of the CN, each network slice has a dedicated UP NF.

The terminal device 110 in FIG. 1 may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, a user apparatus, or the like. The terminal device 110 may be a station (STATION, ST) in a wireless local area network (Wireless Local Area Networks, WLAN), and may be a cellular phone, a cordless phone, a Session Initiation Protocol (Session Initiation Protocol, SIP) phone, a wireless local loop (Wireless Local Loop, WLL) station, a personal digital processing (Personal Digital Assistant, PDA) device, a handheld device having a wireless communication function, or a relay device, a computing device, or another processing device connected to a wireless modem, an in-vehicle device, a wearable device, and a terminal device in a next-generation communications system such as a 5G network or a terminal device in a future evolved public land mobile network (Public Land Mobile Network, PLMN) or the like. As an example rather than a limitation, in the embodiments of this application, the terminal device 110 may alternatively be a wearable device. The wearable device may also be referred to as a wearable intelligent device, and is a generic name of wearable devices developed by intelligently designing daily wear by using a wearable technology, such as glasses, gloves, a watch, clothing, or shoes. A wearable device is a portable device that can be directly worn on a body or integrated into clothes or an accessory of a user. The wearable device is not merely a hardware device, and further implements powerful functions through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

For ease of understanding, some terms in this specification are first described.

A network slice (Network Slice, NS) indicates that different logical networks are customized on a physical or virtual network infrastructure based on different service requirements. The network slice may be a complete end-to-end network that includes a terminal device, a radio access network, a transmission network, a core network, and an application server, can provide a telecommunications service, and has a network capability to some extent. The network slice may also be any combination of the foregoing terminal, radio access network, transmission network, core network, and application server, for example, the network slice includes only the radio access network and the core network. The network slice may have one or more of the following characteristics: A radio access network may be sliced or may not be sliced; the radio access network may be shared by a plurality of network slices; features of different network slices may be different from network functions that form the network slices.

A network slice instance (Network slice instance, NSI) is a really running logical network, and can meet a particular network feature or service requirement. One network slice instance may provide one or more services.

In a network, a network slice needs to be identified by corresponding identification information. The identification information of the network slice may be represented by using at least one of the following parameters:
1. Single network slice selection assistance information (Single Network Slice Selection Assistance information, S-NSSAI). The S-NSSAI includes at least a slice/service type (Slice/Service type, SST), and optionally, may further include a slice differentiator (Slice Differentiator, SD). The SST is used to indicate behavior of a network slice, for example, a feature and a service type of the network slice, and the SD is supplement information of the SST. In a session, if the SST points to a plurality of network slices, the SD may correspond to a unique network slice instance in the session. In an example, one network slice is in a one-to-one correspondence with one piece of S-NSSAI, that is, one network slice is uniquely identified by one piece of S-NSSAI. In another example, one network slice may correspond to a plurality of pieces of S-NSSAI, that is, one network slice may be identified by a plurality of pieces of S-NSSAI, for example, in a scenario in which one network slice has a plurality of sessions. The S-NSSAI, the SST, and the SD may be represented in a plurality of forms, for example, may be in a form of a number, or may be in a form of a character, or may be in a form of a combination of a number and a character. This is not limited in this specification.
2. Network slice category (Category). The category may be determined based on network slice information (for example, S-NSSAI), an operator identifier, an application identifier, a service type, and the like. For example, network slices that are of a plurality of data service types and that have different S-NSSAI in one operator network are classified into different categories; network slices of a same service type in a plurality of operator networks are classified into a same category, and the like. One category may identify one or more network slices. Different categories may include a same piece of S-NSSAI, or may include different pieces of S-NSSAI. A category may be represented by a digit-based identifier such as category 0 or category 1, or may be in another form. This is not limited in this specification.

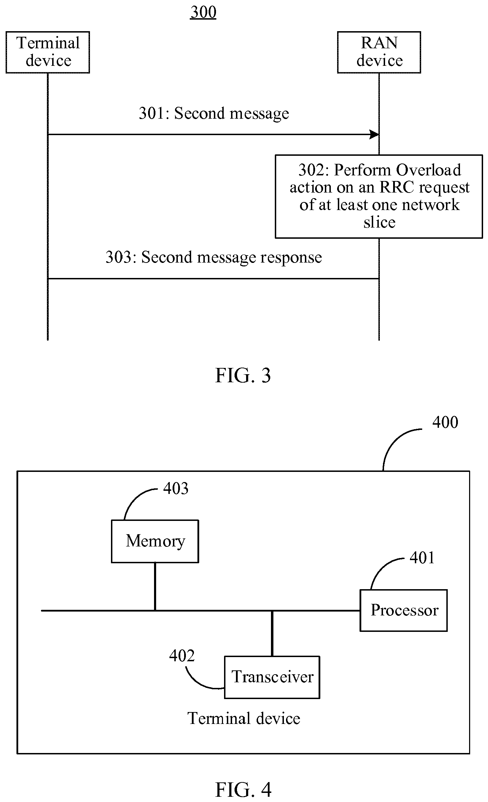

The following describes in detail the method embodiments of this application with reference to FIG. 2 and FIG. 3. Specific embodiments are used below to describe in detail the technical solutions of this application. The following several specific embodiments may be combined with each other, and a same or similar concept or process may not be described repeatedly in some embodiments. It should be understood that FIG. 2 and FIG. 3 are schematic flowcharts of communication methods according to embodiments of this application, and show detailed communication steps or operations of the methods. However, these steps or operations are merely examples, and other operations or variations of the operations in FIG. 2 and FIG. 3 may be further performed in the embodiments of this application. In addition, the steps in FIG. 2 and FIG. 3 may be performed in a sequence different from the sequences shown in FIG. 2 and FIG. 3, and not all the operations in FIG. 2 and FIG. 3 may be necessarily performed.

FIG. 2 is a schematic flowchart of an overload control method according to an embodiment of this application. The method 200 may be applied to communication between the CN device and the RAN device in the communications system shown in FIG. 1, and includes the following steps:
201: A CN device determines to perform overload control for at least one network slice.

In this embodiment of this application, one terminal device may simultaneously access one or more network slices. Periodically or triggered by an event, the CN device collects statistics about a load, for example, a signaling load, a quantity of connections, and a quantity of sessions, generated when the terminal device accesses one or more network slices. When the CN device detects that at least one network slice accessed by the terminal device is overloaded, that is, when a resource requirement of the terminal device on the at least one accessed network slice exceeds a resource allocated by the CN device to the terminal device, the CN device determines to perform overload control on the at least one network slice.

Step 202: The CN device sends a first message to a RAN device.

The first message includes an overload response (Overload Response) to at least one piece of S-NSSAI or at least one category.

In this embodiment of this application, the CN device instructs, based on information about the at least one network slice whose overload control is determined to be performed in step 201, the RAN device to reduce CN resource occupation of one or more network slices accessed by the terminal device, for example, a load of signaling sent to a CN device when the terminal device accesses the one or more network slices. Specifically, the CN device may instruct, by using the overload response in the first message, the RAN device to perform an overload action (Overload Action). For example, the overload response in the first message includes a corresponding overload action. The terminal device simultaneously accesses one or more network slices. The overload action is applied to a radio resource control (Radio Resource Control, RRC) request that is of at least one network slice of the terminal device and that is included in the first message.

In an embodiment, the CN device adds, to the first message, an overload response to S-NSSAI of the at least one network slice accessed by the terminal device. Table 1 shows S-NSSAI-related information included in the first message. An S-NSSAI list includes one or more pieces of S-NSSAI, and a value of a quantity of S-NSSAI list entries is from 1 to maxnoofNo3s (maxnoofNo3s is used to indicate a maximum quantity of pieces of S-NSSAI supported by a network, for example, maxnoofNo3s=64 indicates that the network supports a maximum of 64 pieces of S-NSSAI). As indicated by M (Mandatory) in Table 1, the first message mandatorily includes an S-NSSAI element. Further, for each piece of S-NSSAI, the first message further includes a corresponding overload response. The overload response is used to instruct the RAN device to perform an overload action on an RRC request that is initiated by the terminal device for the S-NSSAI, for example, rejecting RRC connection setup for non-emergency data transmission of the S-NSSAI when the terminal device conducts a mobile originated call, rejecting RRC connection setup for signaling of the S-NSSAI when the terminal device conducts the mobile originated call, allowing only RRC connection setup for a service and an emergency session of the S-NSSAI when the terminal device conducts a mobile terminated call, allowing only RRC connection setup for a service and a high-priority session of the S-NSSAI when the terminal device conducts the mobile terminated call, or rejecting only RRC connection setup for delay tolerant access of the S-NSSAI.

Optionally, for each piece of S-NSSAI, the first message further includes a traffic load reduction indication (Traffic Load Reduction Indication). The traffic load reduction indication may be a percentage, and is used to indicate a proportion of RRC requests that are initiated by the terminal device for the S-NSSAI and that are rejected by the RAN device, for example, indicate that the RAN device rejects 30% of RRC requests that are initiated by the terminal device for one piece of S-NSSAI.

**Table 1 S-NSSAI-related information included in the first message**

| IE/Group name | Presence | Range |
|---|---|---|
| S-NSSAI List | | |
| > S-NSSAI List Item | | 1..<maxnoofNo3s > |
| >> S-NSSAI | M | |
| >> Overload Response | M | |
| >> Traffic Load Reduction Indication | O | |

Optionally, the overload response in the foregoing Table 1 is for all S-NSSAI in the S-NSSAI list, that is, all the S-NSSAI in the S-NSSAI list has a same overload response. Table 2 shows S-NSSAI-related information included in the first message in this case. Correspondingly, the traffic load reduction indication is also for all S-NSSAI in the S-NSSAI list.

**Table 2 S-NSSAI-related information that is included in the first message and that has a uniform overload response**

| IE/Group name | Presence | Range |
|---|---|---|
| Overload Response | M | |
| S-NSSAI List | M | |
| > S-NSSAI List Item | | 1..<maxnoofNo3s> |
| >> S-NSSAI | M | |
| Traffic Load Reduction Indication | O | |

In another embodiment, the CN device adds, to the first message, an overload response to a category of the at least one network slice accessed by the terminal device. Table 3 shows category-related information included in the first message. A category list includes one or more categories, and a value of a quantity of category list entries is from 1 to maxnoofNo4s (maxnoofNo4s is used to indicate a maximum quantity of categories supported by the network, for example, maxnoofNo4s=16 indicates that the network supports a maximum of 16 categories). As shown in Table 3, the first message mandatorily includes at least one category. Further, for each category, the first message further includes an overload response. Optionally, for each category, the first message further includes a traffic load reduction indication.

**Table 3 Category-related information included in the first message**

| IE/Group name | Presence | Range |
|---|---|---|
| Category List | | |
| > Category List Item | | 1..<maxnoofNo4s> |
| >> Category | M | |
| >> Overload Response | M | |
| >> Traffic Load Reduction Indication | O | |

In this embodiment of this application, the first message may be an overload start (Overload Start) message, or may be an overload control message, or may be a message in another name. This is not limited in this specification.

203. The RAN device performs the overload action on the RRC request of the at least one network slice.

In this embodiment of this application, the RAN device performs the overload action on the RRC request of the at least one network slice based on the information that is about the at least one overloaded network slice and that is received in step 202. Specifically, based on an overload response corresponding to at least one piece of S-NSSAI or at least one category in the first message, the RAN device may perform an overload action on a corresponding RRC request of the at least one piece of S-NSSAI or the at least one category, where the overload action is indicated in the overload response and may be, for example, rejecting RRC connection setup for non-emergency data transmission of the S-NSSAI or the category when the terminal device conducts a mobile originated call, rejecting RRC connection setup for signaling of the S-NSSAI or the category when the terminal device conducts the mobile originated call, allowing only RRC connection setup for a service and an emergency session of the S-NSSAI or the category when the terminal device conducts a mobile terminated call, allowing only RRC connection setup for a service and a high-priority session of the S-NSSAI or the category when the terminal device conducts the mobile terminated call, or rejecting only RRC connection setup for delay tolerant access of the S-NSSAI or the category.

Optionally, the RRC request includes an RRC connection request, an RRC connection resume request, or an RRC connection reestablishment request, or the like.

According to the foregoing steps, when at least one network slice in the network is overloaded, the CN device can instruct the RAN device to perform overload control for the at least one network slice, and the RAN device performs an overload action on an RRC request of the at least one network slice.

FIG. 3 is a schematic flowchart of another overload control method according to an embodiment of this application. The method 300 may be applied to communication between the RAN device and the terminal device in the communications system shown in FIG. 1, and includes the following steps:
301: A terminal device sends a second message to a RAN device.

The second message includes an RRC request cause of at least one SST or at least one category.

In this embodiment of this application, one terminal device simultaneously accesses one or more network slices. The second message is used by the terminal device to send an RRC request, for example, an RRC connection request (RRC Connection Request), an RRC connection resume request (RRC Connection Resume Request), or an RRC connection reestablishment request (RRC Connection Reestablishment Request), to the RAN device. Correspondingly, the second message may be an RRC connection request message, an RRC connection resume request message, an RRC connection reestablishment request message, or the like. The second message may alternatively be a message with another name. This is not limited in this specification.

In the foregoing RRC request, the terminal device needs to notify the RAN device of a cause (cause) for initiating the RRC request by the terminal device. Specifically, the RRC request cause is intended for at least one SST or at least one category of the terminal device. For example, Table 4 shows an RRC connection request cause that is intended for an SST and that is added to an RRC connection request message by UE. Table 5 shows an RRC connection resume request cause that is intended for an SST and that is added to an RRC connection resume request message by the UE. Table 6 shows an RRC connection reestablishment request cause that is intended for an SST and that is added to the RRC connection reestablishment request message by the UE. An establishment cause (EstablishmentCause) of an RRC connection request and a resume cause (ResumeCause) of an RRC connection resume request include the following causes: emergency, indicating an emergency call; highPriorityAccess, indicating high priority access; mt-Access, indicating that the UE accesses as a called party; mo-Signalling, indicating that the UE sends signaling as a calling party; mo-Data, indicating that the UE sends data as a calling party; delayTolerantAccess-v1020, indicating delay tolerant access (a cause added to release R10 of an LTE protocol); and mo-VoiceCall-v1280, indicating that the UE sends a voice service as a calling party (a cause added to release R12 of the LTE protocol). The reestablishment cause (ReestablishmentCause) of the RRC connection reestablishment request includes the following causes: reconfigurationFailure, indicating that reconfiguration fails; handoverFailure, indicating that handover fails; and otherFailure, indicating other failures. It should be understood that the UE may add RRC requests of a plurality of SSTs to the second message. Correspondingly, the UE adds a plurality of message elements shown in Table 4 to the RRC connection request message, where each message element in Table 4 corresponds to one SST. The UE adds a plurality of message elements shown in Table 5 to the RRC connection resume request message, where each message element in Table 5 corresponds to one SST. The UE adds a plurality of message elements shown in Table 6 to the RRC connection reestablishment request message, where each message element in Table 6 corresponds to one SST.

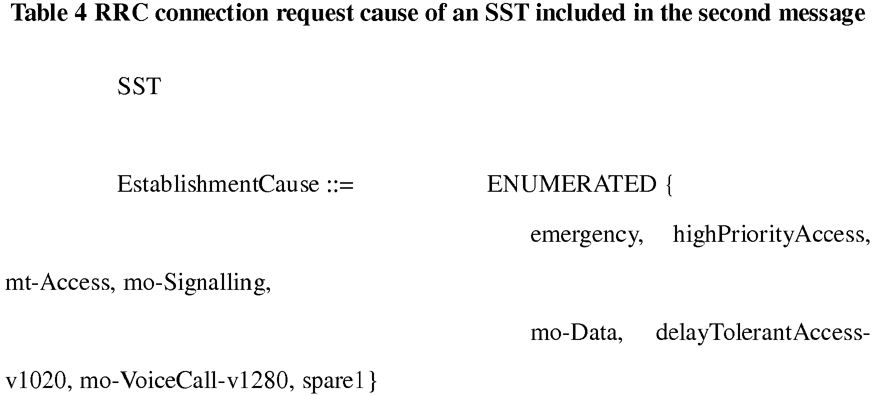

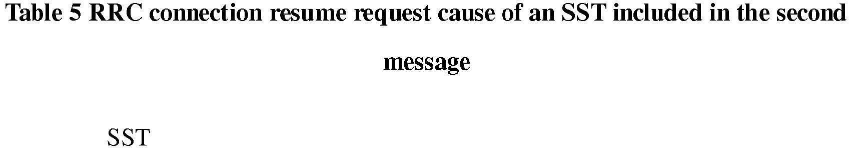

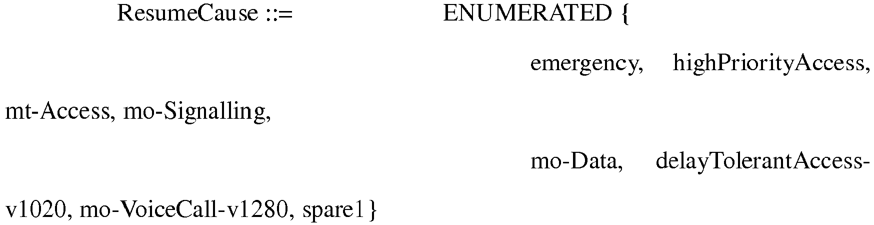

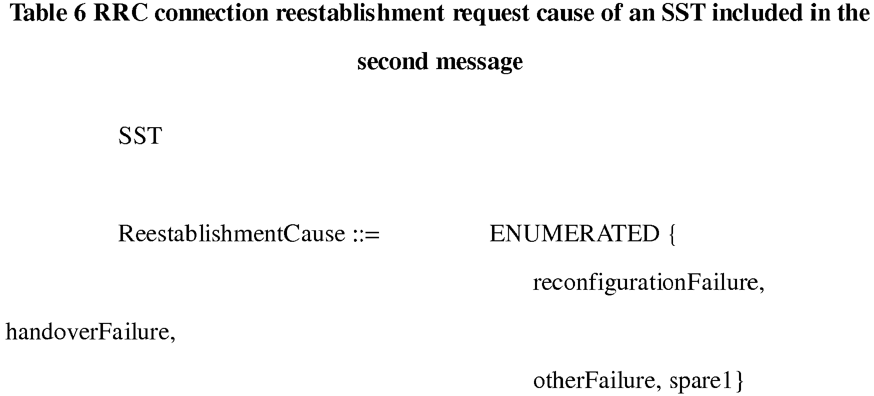

Optionally, in the foregoing second message, the SST message element may be further included in a field of an RRC request cause. For example, in Table 4, at least one SST corresponding to the RRC connection request of the emergency call initiated by the UE may be carried after emergency of EstablishmentCause, to indicate that the UE initiates the RRC connection request of the emergency call for the at least one SST. Similarly, at least one SST corresponding to the RRC connection request initiated by the UE for the cause may be carried after another cause of EstablishmentCause. In this manner, in a case in which the UE adds RRC requests of a plurality of SSTs to the second message, the UE adds an EstablishmentCause field to the RRC connection request message, and adds at least one SST behind a message element of at least one cause of the field. Similarly, a similar operation may also be performed for ResumeCause in Table 5 and ReestablishmentCause in Table 6, and details are not described herein again.

Optionally, in the second message, the SST may not be used, and instead an index value corresponding to the SST is included in a field of the RRC request cause. For example, based on a hash function, an SST is used as a key of the hash function, and the key is mapped to an index value after the hash function is used. In an implementation, a division-remainder method is used. For any SST, a remainder is calculated by dividing the SST by M and is used as an index value corresponding to the SST. M may be a prime number preconfigured in a system.

Similarly, Table 7 shows an RRC connection request cause that is intended for a category and that is added to an RRC connection request message by UE. Table 8 shows an RRC connection resume request cause that is intended for a category and that is added to an RRC connection resume request message by the UE. Table 9 shows an RRC connection reestablishment request cause that is intended for a category and that is added to the RRC connection reestablishment request message by the UE. It should be understood that, similar to the foregoing operation on the SST, in the second message, the UE may further add a category element to a field of an RRC request cause.

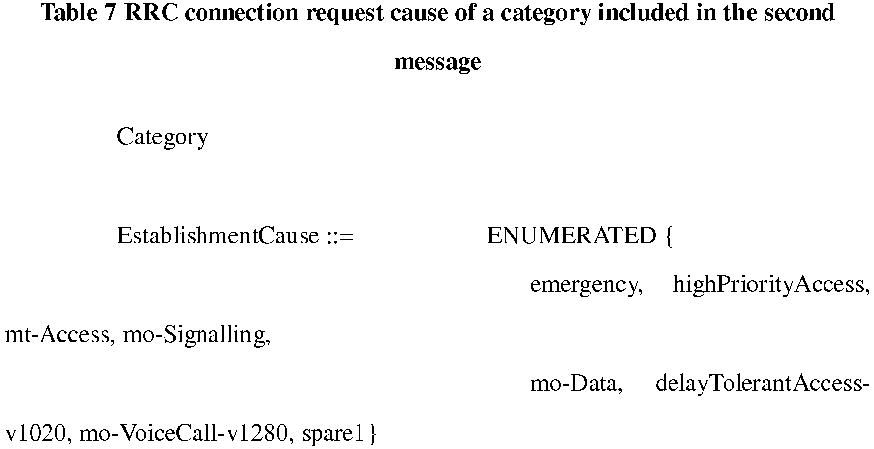

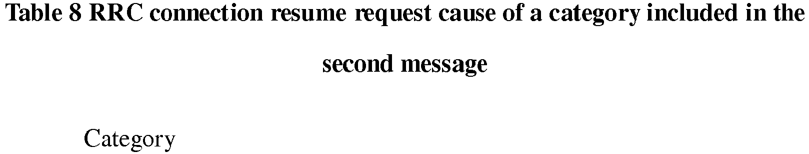

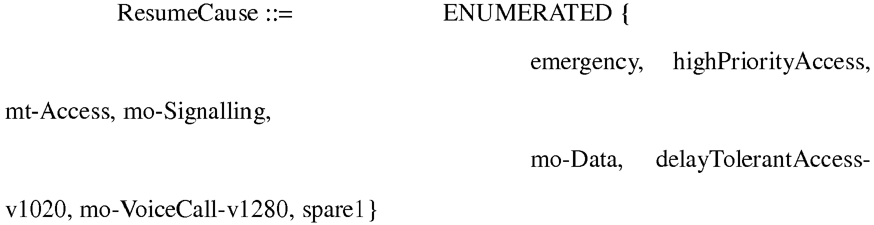

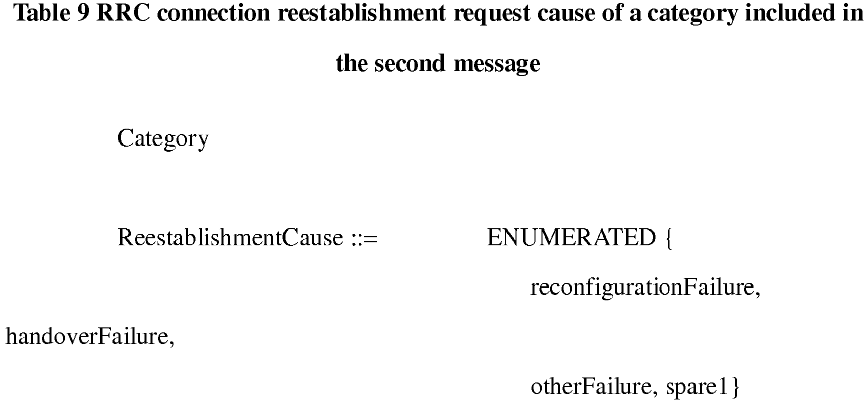

302. The RAN device performs an overload action on an RRC request of at least one network slice.

In this embodiment of this application, the RAN device may perform the overload action on the RRC request based on an overload indication received from a CN device, or based on a resource status of the RAN device. In an embodiment, the RAN device receives an overload response to the at least one network slice, where the overload response is sent by the CN device, and the RAN device performs an overload action on the RRC request of the at least one network slice by the UE based on overload action information in the overload response. In another embodiment, periodically or triggered by an event, the RAN device collects statistics about a load, for example, a signaling load, a quantity of connections, and a quantity of sessions, generated when the UE accesses one or more network slices. When the RAN device detects that at least one network slice accessed by the UE is overloaded, that is, when a resource requirement of the UE for the at least one accessed network slice exceeds a resource allocated by the RAN device to the UE, the RAN device performs an overload action on the RRC request of the at least one network slice, for example, rejecting RRC connection setup for non-emergency data transmission of S-NSSAI when the UE calls, rejecting RRC connection setup for signaling of the S-NSSAI when the UE calls, allowing only RRC connection setup for a service and an emergency session of the S-NSSAI when the UE is called, allowing only RRC connection setup for a service and a high-priority session of the S-NSSAI when the UE is called, or rejecting only RRC connection setup for delay tolerant access of the S-NSSAI.

Optionally, the RRC request includes an RRC connection request, an RRC connection resume request, or an RRC connection reestablishment request, or the like.

303: The RAN device sends a second message response to the terminal device.

In this embodiment of this application, the second message response is used by the RAN device to notify the terminal device of a result of the overload action performed by the RAN device on an RRC request of the at least one SST or the at least one category. For example, the second message response may be an RRC connection request response, an RRC connection resume request response, or an RRC connection reestablishment response.

According to the foregoing steps, when at least one network slice in a network is overloaded, the RAN device can perform an overload action on an RRC request of the at least one network slice.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk (SSD)), or the like. A person skilled in the art may use different methods to implement the described functions for each particular application, but it should not be considered that the implementation goes beyond the scope of this patent application.

The foregoing describes in detail the method embodiments of this application with reference to FIG. 2 and FIG. 3. The following describes in detail apparatus embodiments of this application with reference to FIG. 4 to FIG. 9. It should be understood that the apparatus embodiments correspond to the method embodiments. For similar descriptions, refer to the method embodiments. It should be noted that the apparatus embodiments may be used in conjunction with the foregoing methods, and may also be separately used.

FIG. 4 is a schematic block diagram of a terminal device 400 according to an embodiment of this application. The terminal device 400 may correspond to (for example, may be configured as or is) the terminal device described in the method 300. The terminal device 400 may include a processor 401 and a transceiver 402. The processor 401 is in communication connection with the transceiver 402. Optionally, the terminal device 400 further includes a memory 403. The memory 403 is in communication connection with the processor 401. Optionally, the processor 401, the memory 403, and the transceiver 402 may be in communication connection with each other, the memory 403 may be configured to store an instruction, and the processor 401 is configured to execute the instruction stored in the memory 403, to control the transceiver 402 to send information or a signal. The processor 401 and the transceiver 402 are separately configured to perform actions or processing processes performed by the terminal device in the method 300. Herein, to avoid repetition, detailed descriptions are omitted.

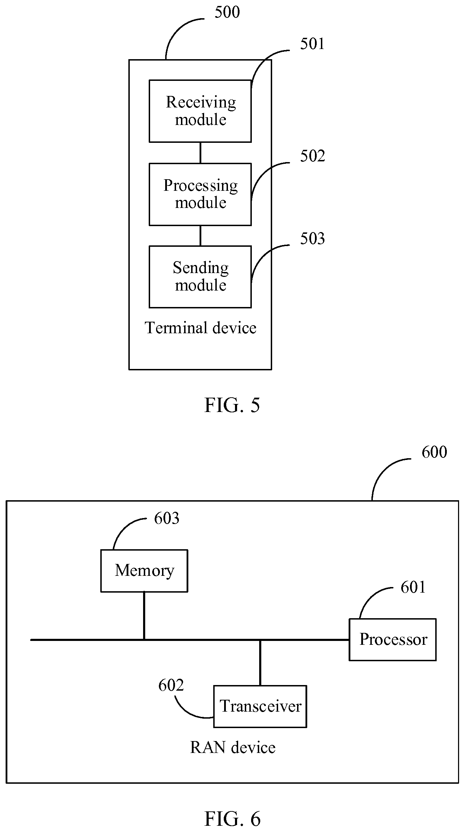

FIG. 5 is another schematic block diagram of a terminal device 500 according to an embodiment of this application. The terminal device 500 may correspond to (for example, may be configured as or is) the terminal device described in the method 300. The terminal device 500 may include a receiving module 501, a processing module 502, and a sending module 503. The processing module 502 is separately in communication connection with the receiving module 501 and the sending module 503. The modules or units in the terminal device 500 are respectively configured to perform the actions or the processing processes performed by the terminal device in the method 300. Herein, to avoid repetition, detailed descriptions are omitted.

FIG. 6 is a schematic block diagram of a RAN device 600 according to an embodiment of this application. The RAN device 600 may correspond to (for example, may be configured as or is) the RAN device described in the method 200 or the RAN device described in the method 300. The RAN device 600 may include a processor 601 and a transceiver 602. The processor 601 is in communication connection with the transceiver 602. Optionally, the RAN device 600 further includes a memory 603. The memory 603 is in communication connection with the processor 601. Optionally, the processor 601, the memory 603, and the transceiver 602 may be in communication connection with each other, the memory 603 may be configured to store an instruction, and the processor 601 is configured to execute the instruction stored in the memory 603, to control the transceiver 602 to send information or a signal. The processor 601 and the transceiver 602 are separately configured to perform actions or processing processes performed by the RAN device in the method 200 or the RAN device in the method 300. Herein, to avoid repetition, detailed descriptions are omitted.

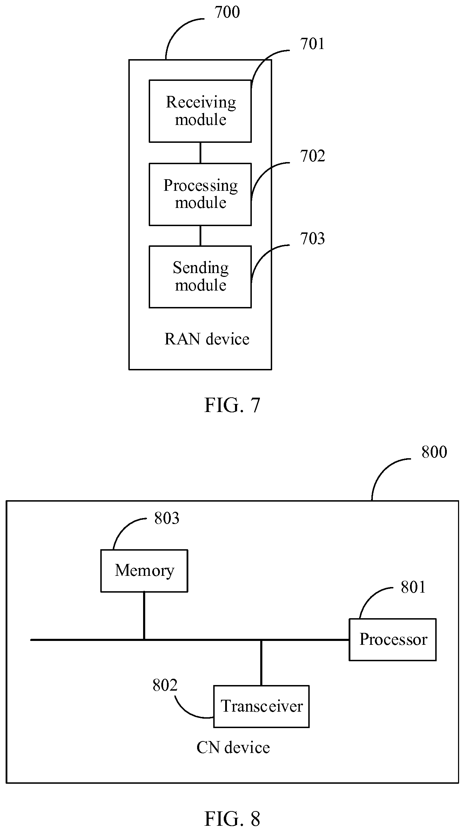

FIG. 7 is another schematic block diagram of a RAN device 700 according to an embodiment of this application. The RAN device 700 may correspond to (for example, may be configured as or is) the RAN device described in the method 200 or the RAN device described in the method 300. The RAN device 700 may include a receiving module 701, a processing module 702, and a sending module 703. The processing module 702 is separately in communication connection with the receiving module 701 and the sending module 703. The modules or units in the RAN device 700 are respectively configured to perform the actions or the processing processes performed by the RAN device in the method 200 or the RAN device in the method 300. Herein, to avoid repetition, detailed descriptions are omitted.

FIG. 8 is a schematic block diagram of a CN device 800 according to an embodiment of this application. The CN device 800 may correspond to (for example, maybe configured as or is) the CN device described in the method 200 or the CN device described in the method 300. The CN device 800 may include a processor 801 and a transceiver 802. The processor 801 is in communication connection with the transceiver 802. Optionally, the CN device 800 further includes a memory 803. The memory 803 is in communication connection with the processor 801. Optionally, the processor 801, the memory 803, and the transceiver 802 may be in communication connection with each other, the memory 803 may be configured to store an instruction, and the processor 801 is configured to execute the instruction stored in the memory 803, to control the transceiver 802 to send information or a signal. The processor 801 and the transceiver 802 are separately configured to perform actions or processing processes performed by the CN device in the method 200 or the CN device in the method 300. Herein, to avoid repetition, detailed descriptions are omitted.

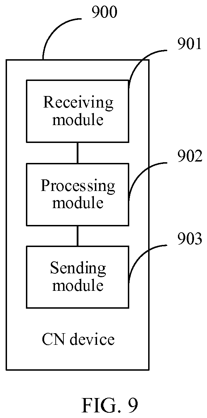

FIG. 9 is another schematic block diagram of a CN device 900 according to an embodiment of this application. The CN device 900 may correspond to (for example, maybe configured as or is) the CN device described in the method 200 or the CN device described in the method 300. The CN device 900 may include a receiving module 901, a processing module 902, and a sending module 903. The processing module 902 is separately in communication connection with the receiving module 901 and the sending module 903. The modules or units in the CN device 900 are respectively configured to perform the actions or the processing processes performed by the CN device in the method 200 or the CN device in the method 300. Herein, to avoid repetition, detailed descriptions are omitted.

It should be understood that the processors (401, 601, and 801) in the apparatus embodiments of this application may be a central processing unit (Central Processing Unit, CPU for short), a network processor (Network Processor, NP for short), a hardware chip, or any combination thereof. The hardware chip may be an application-specific integrated circuit (Application-Specific Integrated Circuit, ASIC for short), a programmable logic device (Programmable Logic Device, PLD for short), or a combination thereof. The PLD may be a complex programmable logic device (Complex Programmable Logic Device, CPLD for short), a field-programmable logic gate array (Field-Programmable Gate Array, FPGA for short), generic array logic (Generic Array Logic, GAL for short), or any combination thereof.

The memories (403, 603, and 803) in the apparatus embodiments of this application may be a volatile memory (Volatile Memory), for example, a random access memory (Random Access Memory, RAM for short), or may be a nonvolatile memory (Non-Volatile Memory), for example, a read-only memory (Read-Only Memory, ROM for short), a flash memory (Flash Memory), a hard disk drive (Hard Disk Drive, HDD for short), or a solid-state drive (Solid-State Drive, SSD for short), or may be a combination of the foregoing types of memories.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this patent application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this patent application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The protection scope of this patent application shall be subject to the protection scope of the claims.

## Claims

1. A network overload control method (200), comprising:
determining (201), by a core network device, to perform overload control for at least one network slice;
**characterized by** further comprising:
sending (202), by the core network device, a first message to a radio access network device, wherein the first message is used to instruct the radio access network device to perform an overload action on a radio resource control, RRC, request of the at least one network slice, and the first message includes a traffic load reduction indication, used to indicate a proportion of RRC requests that are initiated by a terminal device for the at least one network slice and that are rejected by the radio access network device.

2. A network overload control method (200), comprising:
performing (203), by a radio access network device, an overload action on a radio resource control, RRC, request of at least one network slice,
**characterized by**, before performing the overload action:
receiving (202), by the radio access network device, a first message sent by a core network device, wherein the first message is used to instruct the radio access network device to perform the overload action on the RRC request of the at least one network slice, and the first message includes a traffic load reduction indication, used to indicate a proportion of RRC requests that are initiated by a terminal device for the at least one network slice and that are rejected by the radio access network device.

3. The method (200, 300) according to claim 2, wherein the performing (203), by the radio access network device, the overload action on the RRC request of the at least one network slice comprises:
receiving (301), by the radio access network device, a second message sent by the terminal device, wherein the second message is used to indicate the RRC request of the at least one network slice by the terminal device;
performing (302), by the radio access network device, the overload action on the RRC request of the at least one network slice; and
sending (303), by the radio access network device, a second message response to the terminal device, wherein the second message response is used to notify the terminal device of a result of the overload action.

4. The method (200) according to claim 1 or 2, wherein the first message comprises at least one piece of single network slice selection assistance information or at least one network slice category.

5. The method (300) according to claim 3, wherein the second message comprises an RRC request cause of at least one slice/service type or at least one network slice category.

6. The method (200, 300) according to any one of claims 1 to 3, wherein the performing the overload action on the RRC request of the at least one network slice comprises at least one of the following: rejecting RRC connection setup for non-emergency data transmission of the at least one network slice when the terminal device conducts a mobile originated call, rejecting RRC connection setup for signaling of the at least one network slice when the terminal device conducts the mobile originated call, allowing only RRC connection setup for a service and an emergency session of the at least one network slice when the terminal device conducts a mobile terminated call, allowing only RRC connection setup for a service and a high-priority session of the at least one network slice when the terminal device conducts the mobile terminated call, or rejecting only RRC connection setup for delay tolerant access of the at least one network slice.

7. A core network device (900), comprising:
a processing module (902), configured to determine to perform overload control for at least one network slice,
**characterized by** further comprising:
a sending module (903), configured to send a first message, wherein the first message is used to instruct a radio access network device to perform an overload action on a radio resource control, RRC, request of the at least one network slice, and the first message includes a traffic load reduction indication, used to indicate a proportion of RRC requests that are initiated by a terminal device for the at least one network slice and that are rejected by the radio access network device.

8. A radio access network device (700), comprising:
a processing module (702), configured to perform an overload action on a radio resource control, RRC, request of at least one network slice,
**characterized by** further comprising:
a receiving module (701), configured to receive a first message, wherein the first message is used to instruct the radio access network device to perform the overload action on the RRC request of the at least one network slice, and the first message includes a traffic load reduction indication, used to indicate a proportion of RRC requests that are initiated by a terminal device for the at least one network slice and that are rejected by the radio access network device.

9. The radio access network device (700) according to claim 8, comprising:
the receiving module (701), further configured to receive a second message, wherein the second message is used to indicate the RRC request of the at least one network slice by the terminal device; and
a sending module (703), configured to send a second message response, wherein the second message response is used to notify the terminal device of a result of the performed overload action.

10. The core network device (900) according to claim 7 or the radio access network device (700) according to claim 8, wherein the first message comprises at least one piece of single network slice selection assistance information or at least one network slice category.

11. The radio access network device (700) according to claim 9, wherein the second message comprises an RRC request cause of at least one slice/service type or at least one network slice category.

12. The core network device (900) or radio access network device (700) according to any one of claims 7 to 10, wherein the performing the overload action on the RRC request of the at least one network slice comprises at least one of the following: rejecting RRC connection setup for non-emergency data transmission of the at least one network slice when the terminal device conducts a mobile originated call, rejecting RRC connection setup for signaling of the at least one network slice when the terminal device conducts the mobile originated call, allowing only RRC connection setup for a service and an emergency session of the at least one network slice when the terminal device conducts a mobile terminated call, allowing only RRC connection setup for a service and a high-priority session of the at least one network slice when the terminal device conducts the mobile terminated call, or rejecting only RRC connection setup for delay tolerant access of the at least one network slice.

## Patentansprüche

1. Verfahren zur Steuerung von Netzwerküberlast (200), umfassend:
Bestimmen (201) durch eine Kernnetzwerkvorrichtung, Überlaststeuerung für mindestens einen Netzwerk-"Slice" durchzuführen;
**dadurch gekennzeichnet, dass** es ferner umfasst:
Senden (202) einer ersten Nachricht durch die Kernnetzwerkvorrichtung an eine Funkzugangsnetzwerkvorrichtung, wobei die erste Nachricht verwendet wird, um die Funkzugangsnetzwerkvorrichtung zum Durchführen einer Überlastmaßnahme an einer Funkressourcensteuerungs-, RRC-Anforderung des mindestens einen Netzwerk-"Slices" anzuweisen, und die erste Nachricht eine Verkehrslastreduktionsanzeige umfasst, die verwendet wird, um einen Anteil von RRC-Anforderungen anzuzeigen, der von einer Endgerätevorrichtung für den mindestens einen Netzwerk-"Slice" initiiert wird und der von der Funkzugangsnetzwerkvorrichtung zurückgewiesen wird.

2. Verfahren zur Steuerung von Netzwerküberlast (200), umfassend:
Durchführen (203) einer Überlastmaßnahme an einer Funkressourcensteuerungs-, RRC-Anforderung mindestens eines Netzwerk-"Slices" durch eine Funkzugangsnetzwerkvorrichtung,
gekennzeichnet vor dem Durchführen der Überlastmaßnahme durch:
Empfangen (202) einer ersten Nachricht, die von einer Kernnetzwerkvorrichtung gesendet wird, durch die Funkzugangsnetzwerkvorrichtung, wobei die erste Nachricht verwendet wird, um die Funkzugangsnetzwerkvorrichtung zum Durchführen der Überlastmaßnahme an der RRC-Anforderung des mindestens einen Netzwerk-"Slices" anzuweisen, und die erste Nachricht eine Verkehrslastreduktionsanzeige umfasst, die verwendet wird, um einen Anteil von RRC-Anforderungen anzuzeigen, der von einer Endgerätevorrichtung für den mindestens einen Netzwerk-"Slice" initiiert wird und der von der Funkzugangsnetzwerkvorrichtung zurückgewiesen wird.

3. Verfahren (200, 300) nach Anspruch 2, wobei das Durchführen (203), der Überlastmaßnahme an der RRC-Anforderung des mindestens einen Netzwerk-"Slices" durch die Funkzugangsnetzwerkvorrichtung umfasst:
Empfangen (301) einer zweiten Nachricht, die von der Endgerätevorrichtung gesendet wird, durch die Funkzugangsnetzwerkvorrichtung, wobei die zweite Nachricht verwendet wird, um die RRC-Anforderung des mindestens einen Netzwerk-"Slices" durch die Endgerätevorrichtung anzuzeigen;
Durchführen (302) der Überlastmaßnahme an der RRC-Anforderung des mindestens einen Netzwerk-"Slices" durch die Funkzugangsnetzwerkvorrichtung; und
Senden (303) einer Antwort auf die zweite Nachricht durch die Funkzugangsnetzwerkvorrichtung an die Endgerätevorrichtung, wobei die Antwort auf die zweite Nachricht verwendet wird, um die Endgerätevorrichtung von einem Ergebnis der Überlastmaßnahme zu verständigen.

4. Verfahren (200) nach Anspruch 1 oder 2, wobei die erste Nachricht mindestens ein Informationselement zur Unterstützung einer Auswahl eines einzelnen Netzwerk-"Slices" oder mindestens eine Netzwerk-"Slice"-Kategorie umfasst.

5. Verfahren (300) nach Anspruch 3, wobei die zweite Nachricht einen RRC-Anforderungsgrund mindestens eines "Slice"-/Diensttyps oder mindestens eine Netzwerk-"Slice"-Kategorie umfasst.

6. Verfahren (200, 300) nach einem der Ansprüche 1 bis 3, wobei das Durchführen der Überlastmaßnahme an der RRC-Anforderung des mindestens einen Netzwerk-"Slices" mindestens eines von Folgendem umfasst: Zurückweisen eines RRC-Verbindungsaufbaus für Nicht-Notfall-Datenübertragung des mindestens einen Netzwerk-"Slices", wenn die Endgerätevorrichtung einen abgehenden Mobilfunkruf durchführt, Zurückweisen eines RRC-Verbindungsaufbaus für Signalisierung des mindestens einen Netzwerk-"Slices", wenn die Endgerätevorrichtung den abgehenden Mobilfunkruf durchführt, Zulassen eines RRC-Verbindungsaufbaus nur für einen Dienst und eine Notfallsitzung des mindestens einen Netzwerk-"Slices", wenn die Endgerätevorrichtung einen eingehenden Mobilfunkruf durchführt, Zulassen eines RRC-Verbindungsaufbaus nur für einen Dienst und eine Sitzung höherer Priorität des mindestens einen Netzwerk-"Slices", wenn die Endgerätevorrichtung den eingehenden Mobilfunkruf durchführt, oder Zurückweisen eines RRC-Verbindungsaufbaus nur für verzögerungstoleranten Zugang des mindestens einen Netzwerk-"Slices".

7. Kernnetzwerkvorrichtung (900), umfassend:
ein Verarbeitungsmodul (902), das so konfiguriert ist, dass es bestimmt, Überlaststeuerung für mindestens einen Netzwerk-"Slice" durchzuführen,
**dadurch gekennzeichnet, dass** sie ferner umfasst:
ein Sendemodul (903), das zum Senden einer ersten Nachricht konfiguriert ist, wobei die erste Nachricht verwendet wird, um eine Funkzugangsnetzwerkvorrichtung zum Durchführen einer Überlastmaßnahme an einer Funkressourcensteuerungs-, RRC-Anforderung des mindestens einen Netzwerk-"Slices" anzuweisen, und die erste Nachricht eine Verkehrslastreduktionsanzeige umfasst, die verwendet wird, um einen Anteil von RRC-Anforderungen anzuzeigen, der von einer Endgerätevorrichtung für den mindestens einen Netzwerk-Slice initiiert wird und der von der Funkzugangsnetzwerkvorrichtung zurückgewiesen wird.

8. Funkzugangsnetzwerkvorrichtung (700), umfassend:
ein Verarbeitungsmodul (702), das zum Durchführen einer Überlastmaßnahme an einer Funkressourcensteuerungs-, RRC-Anforderung mindestens eines Netzwerk-"Slices" konfiguriert ist,
**dadurch gekennzeichnet, dass** sie ferner umfasst:
ein Empfangsmodul (701), das zum Empfangen einer ersten Nachricht konfiguriert ist, wobei die erste Nachricht verwendet wird, um die Funkzugangsnetzwerkvorrichtung zum Durchführen der Überlastmaßnahme an der RRC-Anforderung des mindestens einen Netzwerk-"Slices" anzuweisen, und die erste Nachricht eine Verkehrslastreduktionsanzeige umfasst, die verwendet wird, um einen Anteil von RRC-Anforderungen anzuzeigen, der von einer Endgerätevorrichtung für den mindestens einen Netzwerk-Slice initiiert wird und der von der Funkzugangsnetzwerkvorrichtung zurückgewiesen wird.

9. Funkzugangsnetzwerkvorrichtung (700) nach Anspruch 8, umfassend:
das Empfangsmodul (701), das ferner zum Empfangen einer zweiten Nachricht konfiguriert ist, wobei die zweite Nachricht verwendet wird, um die RRC-Anforderung des mindestens einen Netzwerk-"Slices" durch die Endgerätevorrichtung anzuzeigen; und
ein Sendemodul (703), das zum Senden einer Antwort auf die zweite Nachricht konfiguriert ist, wobei die Antwort auf die zweite Nachricht verwendet wird, um die Endgerätevorrichtung von einem Ergebnis der Überlastmaßnahme zu verständigen.

10. Kernnetzwerkvorrichtung (900) nach Anspruch 7 oder Funkzugangsnetzwerkvorrichtung (700) nach Anspruch 8, wobei die erste Nachricht mindestens ein Informationselement zur Unterstützung einer Auswahl eines einzelnen Netzwerk-"Slices" oder mindestens eine Netzwerk-"Slice"-Kategorie umfasst.

11. Funkzugangsnetzwerkvorrichtung (700) nach Anspruch 9, wobei die zweite Nachricht einen RRC-Anforderungsgrund mindestens eines "Slice"-/Diensttyps oder mindestens eine Netzwerk-"Slice"-Kategorie umfasst.

12. Kernnetzwerkvorrichtung (900) oder Funkzugangsnetzwerkvorrichtung (700) nach einem der Ansprüche 7 bis 10, wobei das Durchführen der Überlastmaßnahme an der RRC-Anforderung des mindestens einen Netzwerk-"Slices" mindestens eines von Folgendem umfasst:
Zurückweisen eines RRC-Verbindungsaufbaus für Nicht-Notfall-Datenübertragung des mindestens einen Netzwerk-"Slices", wenn die Endgerätevorrichtung einen abgehenden Mobilfunkruf durchführt, Zurückweisen eines RRC-Verbindungsaufbaus für Signalisierung des mindestens einen Netzwerk-"Slices", wenn die Endgerätevorrichtung den abgehenden Mobilfunkruf durchführt, Zulassen eines RRC-Verbindungsaufbaus nur für einen Dienst und eine Notfallsitzung des mindestens einen Netzwerk-"Slices", wenn die Endgerätevorrichtung einen eingehenden Mobilfunkruf durchführt, Zulassen eines RRC-Verbindungsaufbaus nur für einen Dienst und eine Sitzung höherer Priorität des mindestens einen Netzwerk-"Slices", wenn die Endgerätevorrichtung den eingehenden Mobilfunkruf durchführt, oder Zurückweisen eines RRC-Verbindungsaufbaus nur für verzögerungstoleranten Zugang des mindestens einen Netzwerk-"Slices".

## Revendications

1. Procédé de contrôle de surcharge de réseau (200), comprenant :
la détermination (201), par un dispositif de réseau central, de réaliser un contrôle de surcharge pour au moins une tranche de réseau ;
**caractérisé en ce qu'**il comprend en outre :
l'envoi (202), par le dispositif de réseau central, d'un premier message à un dispositif de réseau d'accès radio, le premier message servant à ordonner au dispositif de réseau d'accès radio de réaliser une action de surcharge sur une requête de contrôle de ressource radio, RRC, de l'au moins une tranche de réseau, et le premier message comportant une indication de réduction de charge de trafic, servant à indiquer une proportion de requêtes RRC qui sont lancées par un dispositif terminal pour l'au moins une tranche de réseau et qui sont rejetées par le dispositif de réseau d'accès radio.

2. Procédé de contrôle de surcharge de réseau (200), comprenant :
la réalisation (203), par un dispositif de réseau d'accès radio, d'une action de surcharge sur une requête de contrôle de ressource radio, RRC, d'au moins une tranche de réseau, **caractérisé par**, avant la réalisation de l'action de surcharge :
la réception (202), par le dispositif de réseau d'accès radio, d'un premier message envoyé par un dispositif de réseau central, le premier message servant à ordonner au dispositif de réseau d'accès radio de réaliser l'action de surcharge sur la requête de RRC de l'au moins une tranche de réseau, et le premier message comportant une indication de réduction de charge de trafic, servant à indiquer une proportion de requêtes RRC qui sont lancées par un dispositif terminal pour l'au moins une tranche de réseau et qui sont rejetées par le dispositif de réseau d'accès radio.

3. Procédé (200, 300) selon la revendication 2, dans lequel la réalisation (203), par le dispositif de réseau d'accès radio, de l'action de surcharge sur la requête de RRC de l'au moins une tranche de réseau comprend :
la réception (301), par le dispositif de réseau d'accès radio, d'un second message envoyé par le dispositif terminal, le second message servant à indiquer la requête de RRC de l'au moins une tranche de réseau par le dispositif terminal ;
la réalisation (302), par le dispositif de réseau d'accès radio, de l'action de surcharge sur la requête de RRC de l'au moins une tranche de réseau ; et
l'envoi (303), par le dispositif de réseau d'accès radio, d'une réponse au second message au dispositif terminal, la réponse au second message servant à notifier au dispositif terminal un résultat de l'action de surcharge.

4. Procédé (200) selon la revendication 1 ou 2, dans lequel le premier message comprend au moins un élément d'information d'assistance de sélection de tranche de réseau unique ou au moins une catégorie de tranche de réseau.

5. Procédé (300) selon la revendication 3, dans lequel le second message comprend une cause de requête de RRC d'au moins un type de tranche/service ou au moins une catégorie de tranche de réseau.

6. Procédé (200, 300) selon l'une quelconque des revendications 1 à 3, dans lequel la réalisation de l'action de surcharge sur la requête de RRC de l'au moins une tranche de réseau comprend au moins une des actions suivantes : le rejet d'un établissement de connexion de RRC pour la transmission de données non d'urgence de l'au moins une tranche de réseau quand le dispositif terminal réalise un appel partant d'un mobile, le rejet d'un établissement de connexion de RRC pour la signalisation de l'au moins une tranche de réseau quand le dispositif terminal réalise l'appel partant du mobile, l'autorisation d'un établissement de connexion de RRC uniquement pour un service et une session d'urgence de l'au moins une tranche de réseau quand le dispositif terminal réalise un appel aboutissant à un mobile, l'autorisation d'un établissement de connexion de RRC uniquement pour un service et une session de haute priorité de l'au moins une tranche de réseau quand le dispositif terminal réalise l'appel aboutissant au mobile, ou le rejet d'un établissement de connexion de RRC uniquement pour un accès tolérant les retards de l'au moins une tranche de réseau.

7. Dispositif de réseau central (900), comprenant :
un module de traitement (902), configuré pour déterminer de réaliser un contrôle de surcharge pour au moins une tranche de réseau,
**caractérisé en ce qu'**il comprend en outre :
un module d'envoi (903), configuré pour envoyer un premier message, le premier message servant à ordonner à un dispositif de réseau d'accès radio de réaliser une action de surcharge sur une requête de contrôle de ressource radio, RRC, de l'au moins une tranche de réseau, et le premier message comportant une indication de réduction de charge de trafic, servant à indiquer une proportion de requêtes de RRC qui sont lancées par un dispositif terminal pour l'au moins une tranche de réseau et qui sont rejetées par le dispositif de réseau d'accès radio.

8. Dispositif de réseau d'accès radio (700), comprenant :
un module de traitement (702), configuré pour réaliser une action de surcharge sur une requête de contrôle de ressource radio, RRC, d'au moins une tranche de réseau,
**caractérisé en ce qu'**il comprend en outre :
un module de réception (701), configuré pour recevoir un premier message, le premier message servant à ordonner au dispositif de réseau d'accès radio de réaliser l'action de surcharge sur la requête de RRC de l'au moins une tranche de réseau, et le premier message comportant une indication de réduction de charge de trafic, servant à indiquer une proportion de requêtes de RRC qui sont lancées par un dispositif terminal pour l'au moins une tranche de réseau et qui sont rejetées par le dispositif de réseau d'accès radio.

9. Dispositif de réseau d'accès radio (700) selon la revendication 8, comprenant :
le module de réception (701), configuré en outre pour recevoir un second message, le second message servant à indiquer la requête de RRC de l'au moins une tranche de réseau par le dispositif terminal ; et
un module d'envoi (703), configuré pour envoyer une réponse au second message, la réponse au second message servant à notifier au dispositif terminal un résultat de l'action de surcharge réalisée.

10. Dispositif de réseau central (900) selon la revendication 7 ou dispositif de réseau d'accès radio (700) selon la revendication 8, dans lequel le premier message comprend au moins un élément d'information d'assistance de sélection de tranche de réseau unique ou au moins une catégorie de tranche de réseau.

11. Dispositif de réseau d'accès radio (700) selon la revendication 9, dans lequel le second message comprend une cause de requête de RRC d'au moins un type de tranche/service ou au moins une catégorie de tranche de réseau.

12. Dispositif de réseau central (900) ou dispositif de réseau d'accès radio (700) selon l'une quelconque des revendications 7 à 10, dans lequel la réalisation de l'action de surcharge sur la requête de RRC de l'au moins une tranche de réseau comprend au moins une des actions suivantes : le rejet d'un établissement de connexion de RRC pour la transmission de données non d'urgence de l'au moins une tranche de réseau quand le dispositif terminal réalise un appel partant d'un mobile, le rejet d'un établissement de connexion de RRC pour la signalisation de l'au moins une tranche de réseau quand le dispositif terminal réalise l'appel partant du mobile, l'autorisation d'un établissement de connexion de RRC uniquement pour un service et une session d'urgence de l'au moins une tranche de réseau quand le dispositif terminal réalise un appel aboutissant à un mobile, l'autorisation d'un établissement de connexion de RRC uniquement pour un service et une session de haute priorité de l'au moins une tranche de réseau quand le dispositif terminal réalise l'appel aboutissant au mobile, ou le rejet d'un établissement de connexion de RRC uniquement pour un accès tolérant les retards de l'au moins une tranche de réseau.
